# FASCICULE DE BREVET EUROPEEN

(11) **EP 2 301 836 B1**
(45) Date de publication et mention de la délivrance du brevet: **20.03.2013**
(21) Numéro de dépôt: 10177770.4
(22) Date de dépôt: 21.09.2010
(51) Int. Cl.: B63B 22/06

(54) **Dispositif de bouée à remontée programmée**
Bojenvorrichtung mit programmiertem Auftrieb
Buoy device with programmed rising

(30) Priorité: 11.05.2010 FR 1053689; 21.09.2009 FR 0904487
(43) Date de publication de la demande: 30.03.2011
(73) Titulaire: Vicente, José, 22740 Lezardrieux (FR)
(72) Inventeur: Vicente, José, 22740 Lezardrieux (FR)
(74) Mandataire: Larcher, Dominique

(56) Documents cités:
- US-A- 3 858 166
- US-A- 5 100 353
- US-B1- 7 534 152

## Description

### 1. Domaine de l'invention

Le domaine de l'invention est celui des dispositifs de repérage d'objets immergés comme par exemple les casiers de pêche.

Plus précisément, l'invention concerne un dispositif de bouée à remontée commandée.

### 2. Art antérieur

Des dispositifs de repérage peuvent être mis en oeuvre de manière à signaler temporairement depuis la surface d'un plan d'eau la présence d'un objet qui y est immergé.

De tels dispositifs comprennent classiquement une bouée reliée à un objet à immerger au moyen d'un bout et des moyens pour maintenir de manière réversible la bouée à proximité de cet objet. Ces moyens comprennent un aimant permanent solidaire de la bouée et un électroaimant solidaire d'un support destiné à être solidarisé à l'objet à immerger, ces deux aimants étant prévus pour coopérer.

Lorsque l'objet est jeté dans le plan d'eau, l'électroaimant est activé en sorte que la bouée soit maintenue à proximité de l'objet. Celui-ci n'est alors pas repérable depuis la surface du plan d'eau.

Lorsqu'il est souhaité que l'objet immergé soit repérable, l'électroaimant est désactivé à distance par le propriétaire de l'objet en sorte que la bouée s'en détache et remonte à la surface du plan d'eau.

Un tel dispositif est connu par exemple de US 3 858 166.

Cette technique peut par exemple permettre à un pêcheur d'immerger des casiers sans que ceux-ci puissent être repérés par des personnes mal intentionnées qui voudraient les dérober. La remontée du casier pourra seulement être effectuée après qu'il aura été rendu repérable depuis la surface du plan d'eau par son propriétaire.

Cette technique est efficace en ce qu'elle peut permettre de dissimuler momentanément un objet immergé dans un plan d'eau, par exemple un casier de pêche, et d'éviter que celui-ci puisse être localisé puis dérobé par une personne mal intentionnée. Elle présente néanmoins quelques inconvénients.

### 3. Inconvénients de l'art antérieur

L'électroaimant et l'aimant permanent ont tendance à s'encrasser progressivement au fil de l'utilisation du dispositif pendant les phases au cours desquelles ils se trouvent éloignés l'une de l'autre. Il arrive en effet fréquemment que de la poussière, du sable, de la vase... viennent se déposer à la surface de l'électroaimant et de l'aimant permanent. Il arrive également que ces éléments encaissent des chocs lors de la manipulation du dispositif. Il en résulte que l'effort d'attraction imprimé par l'électroaimant à l'aimant permanent pour maintenir la bouée solidaire de l'objet immergé diminue dans le temps. Cet effort peut être à ce point amoindri qu'il ne permet plus de maintenir de manière efficace la bouée solidaire de l'objet. Celle-ci peut alors s'en détacher de manière intempestive par exemple sous l'effet des courants et remous du plan d'eau et remonter à la surface. L'objet immergé devient alors repérable par quiconque et vulnérable en sorte qu'il peut être remonté et dérobé ou détérioré, ou lorsqu'il s'agit d'un casier de pêche, son contenu peut par exemple être vidé.

En outre, l'électroaimant et l'aimant permanent sont sujets à la corrosion. Ils se détériorent ainsi dans le temps. Ce phénomène est accéléré lorsqu'un tel dispositif est mis en oeuvre en mer.

Par ailleurs, il peut également arriver que la bouée ne remonte pas à la surface quand bien même l'utilisateur le requiert. En effet, lorsqu'un utilisateur souhaite localiser un objet qu'il a immergé, il agit sur des moyens de commande qui inhibent un court instant l'effort d'attraction imprimé par l'électroaimant à l'aimant permanent, après quoi l'électroaimant recouvre ses capacités d'attraction. En fonctionnement normal, lorsque cet effort d'attraction est inhibé, la bouée, dont la densité est plus faible que celle de l'eau dans laquelle elle est immergée, se détache de l'objet immergé et remonte à la surface. Il peut toutefois arriver que la bouée n'a pas le temps de se détacher de l'objet immergé entre l'instant auquel l'électroaimant perd ses capacités d'attraction et celui auquel il les recouvre. Dans ce cas, la bouée ne remonte pas à la surface en sorte que l'utilisateur ne peut repérer la localisation de son objet immergé en vue de le remonter.

Au final, bien que relativement efficace, cette technique de l'art antérieur souffre d'une fiabilité modeste.

### 4. Objectifs de l'invention

L'invention a notamment pour objectif de pallier ces inconvénients de l'art antérieur.

Plus précisément, un objectif de l'invention est de fournir, dans au moins un mode de réalisation, un dispositif de bouée à remontée commandée dans lequel la bouée est maintenue de manière réversible solidaire d'un support par la mise en oeuvre de moyens d'attraction électromagnétique qui soient fiables.

En particulier, l'invention vise, dans au moins un mode de réalisation, à mettre en oeuvre un tel dispositif qui concoure à éviter d'une part que la bouée remonte à la surface de manière intempestive et d'autre part qu'elle soit maintenue immergée quand bien même un utilisateur requiert sa remontée.

L'invention a encore pour objectif, dans au moins un mode de réalisation, de procurer une telle technique qui permette de préserver dans le temps les capacités d'attraction des moyens d'attraction électromagnétique.

L'invention vise ainsi à proposer, dans au moins un mode de réalisation, une telle technique qui conduise à limiter la corrosion des moyens d'attraction électromagnétique.

L'invention vise également à proposer, dans au moins un mode de réalisation de l'invention, une telle technique qui conduise à limiter l'encrassement des moyens d'attraction électromagnétique.

Un objectif de l'invention est encore de procurer, dans au moins un mode de réalisation, une telle technique qui soit simple et relativement économique à mettre en oeuvre et à entretenir.

### 5. Exposé de l'invention

Ces objectifs, ainsi que d'autres qui apparaîtront par la suite, sont atteints à l'aide d'un dispositif de bouée à remontée commandée comprenant une bouée destinée à être reliée de manière réversible à un support immergeable au moyen d'un électroaimant et d'une plaque polaire respectivement solidaires de ladite bouée ou dudit support, et des moyens de désactivation dudit électroaimant, ledit support étant solidarisable à un objet à immerger.

Selon l'invention, un tel dispositif comprend des moyens de protection dudit électroaimant et de ladite plaque polaire lorsque ladite bouée est éloignée dudit support, lesdits moyens de protection comprenant une première et une deuxième trappes mobiles entre une position fermée dans laquelle elles protègent respectivement ladite plaque polaire et ledit électroaimant et une position ouverte dans laquelle ledit électroaimant et ladite plaque polaire peuvent être mis en contact.

Ainsi, l'invention repose sur une approche tout à fait originale qui consiste à mettre en oeuvre des éléments qui protègent l'électroaimant et la plaque polaire lorsqu'ils ne sont pas en contact. On prévient ainsi l'encrassement de leur surface, leur corrosion, et on maintient les capacités d'attraction magnétique de l'électroaimant. La mise en oeuvre de l'invention concoure ainsi à éviter que la bouée remonte à la surface de manière intempestive et qu'elle soit maintenue immergée quand bien même un utilisateur requiert sa remontée.

La mise en oeuvre de telles trappes permet de protéger l'électroaimant et la contre-plaque des chocs et de prévenir le dépôt de matière à leur surface. Ceci contribue à préserver de manière efficace les capacités d'attraction magnétique de ces éléments.

Selon une caractéristique avantageuse de l'invention, lesdits moyens de protection sont à retour automatique.

Ainsi, dès que la bouée est éloignée de son support, les moyens de protection se placent automatiquement dans leur position dans laquelle ils protègent l'électroaimant et la contre-plaque (ou plaque polaire). Ceci permet d'augmenter la fiabilité du dispositif en garantissant que les éléments magnétiques soient convenablement protégés.

De manière préférentielle, ledit électroaimant est du type à éjecteur.

Un électroaimant de ce type intègre un élément formant piston qui forme saillie à la surface de l'électroaimant lorsqu'il est désactivé. Ainsi, lorsque l'électroaimant est désactivé, il perd d'une part son pouvoir d'attraction magnétique et d'autre part l'éjecteur forme saillie à sa surface. Ceci permet de garantir que la bouée soit décollée de son support et ait le temps d'initier sa remontée à la surface avant que l'électroaimant recouvre ses capacités d'attraction magnétique.

Selon un aspect préféré de l'invention, ledit électroaimant et/ou ladite plaque polaire sont en acier inoxydable.

Ceci permet d'éviter la détérioration de l'électroaimant et de la contre-plaque et de réserver leurs capacités d'attraction magnétique. Il est ainsi évité que la bouée se détache de son support de manière intempestive.

Selon un autre aspect avantageux de l'invention, des moyens de rappel élastique agissent sur ladite première trappe pour la maintenir dans ladite position fermée.

Ainsi, dès que la bouée s'éloigne de son support, la trappe protégeant la contre-plaque passe automatiquement de sa position ouverte à sa position fermée.

Un dispositif selon l'invention comprend préférentiellement des moyens de maintien de ladite deuxième trappe dans ladite position ouverte.

Ces moyens de maintien permettent de maintenir la deuxième trappe en position ouverte lorsque la bouée est éloignée du support. Ainsi, lorsqu'un utilisateur souhaite faire coopérer la bouée et son support, il ne doit pas retenir manuellement la deuxième trappe dans sa position ouverte, ce qui facilite la manipulation.

Dans ce cas, lesdits moyens de maintien sont prévus pour relâcher ladite deuxième trappe lorsque ladite bouée est rapprochée dudit support, ladite deuxième trappe étant alors maintenue dans la position ouverte par ladite bouée.

Ainsi, dès que la bouée est mise en place sur son support, la deuxième trappe est déverrouillée et maintenue en position ouverte par la bouée en sorte qu'elle passera automatiquement dans sa position fermée dès que la bouée se détachera de son support.

Selon un aspect avantageux de l'invention, lesdits moyens de désactivation sont du type à impulsion ou programmables.

Lorsqu'ils sont programmables, ils pourront par exemple comprendre une horloge qui pourra être réglée par un utilisateur de façon à commander la remontée de la bouée à une date et une heure données. Lorsqu'ils sont à impulsion, ils pourront par exemple comprendre un émetteur qui transmettra un signal pilotant la remontée de la bouée dès qu'un utilisateur le commande.

Dans un mode de réalisation préférentiel, ledit objet porte des moyens de descente sécurisée.

La mise en oeuvre de tels moyens de descente sécurisée permet de descendre l'objet à immerger de manière délicate en sorte que le dispositif selon l'invention qui en est solidaire soit convenablement positionné lorsque l'objet se situe au fond du plan d'eau de façon que la bouée puisse remonter correctement à la surface lorsque cela est commandé par un utilisateur.

Dans un autre mode de réalisation préférentiel, une deuxième bouée est fixée à une extrémité d'un bout relié audit objet par des moyens de solidarisation prévus pour romprent s'il est tenté de remonter ledit objet en tirant sur ledit bout.

Lorsque la législation le requiert, l'objet immergé peut ainsi être repérable depuis la surface du plan d'eau sans toutefois pouvoir être remonté à la surface par une personne mal intentionnée.

### 6. Liste des figures

D'autres caractéristiques et avantages de l'invention apparaîtront plus clairement à la lecture de la description suivante de modes de réalisation préférentiels, donnés à titre de simples exemples illustratifs et non limitatif, et des dessins annexés, parmi lesquels :
- la figure 1 illustre une vue en perspective d'une bouée d'un dispositif selon l'invention sur laquelle la trappe de protection de la contre-plaque est en position ouverte ;
- la figure 2 illustre une vue en perspective d'une bouée selon l'invention sur laquelle la trappe de protection de la contre-plaque est en position fermée ;
- la figure 3 illustre une vue en coupe d'un support d'un dispositif selon l'invention dont la trappe est en position fermée ;
- la figure 4 illustre une vue en coupe d'une bouée et d'un support coopérant ensemble ;
- la figure 5 illustre la mise en oeuvre d'un dispositif selon l'invention sur un casier de pêche ;
- la figure 6 illustre des moyens de descente sécurisée selon l'invention ;

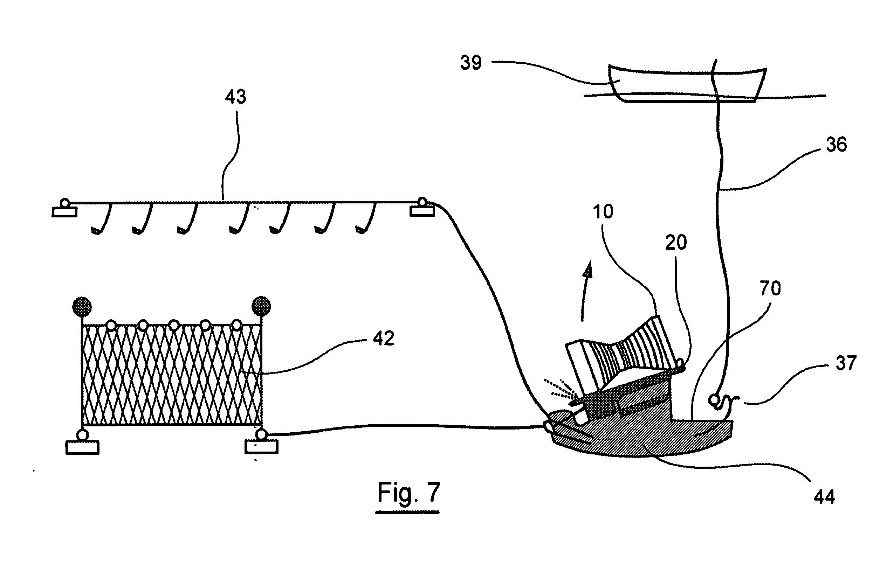

- la figure 7 illustre la mise en oeuvre d'un dispositif selon l'invention sur un lest destiné à maintenir immergé un dispositif selon l'invention pour signaler momentanément la présence d'un filet de pêche ou d'une ligne.

### 7. Description d'un mode de réalisation de l'invention

### 7.1. Rappel du principe de l'invention

Le principe général de l'invention repose sur la mise en oeuvre, au sein d'un dispositif de bouée à remontée commandée dans lequel la bouée est maintenue de manière réversible solidaire d'un support par la mise en oeuvre de moyens d'attraction électromagnétique, d'éléments qui protègent ces moyens d'attraction électromagnétique lorsqu'ils ne sont pas en contact.

On prévient ainsi l'encrassement de leur surface, leur corrosion, et on maintient leurs capacités d'attraction magnétique. La mise en oeuvre de l'invention concoure par conséquent à éviter que la bouée remonte à la surface de manière intempestive et qu'elle soit maintenue immergée quand bien même un utilisateur requiert sa remontée.

### 7.2. Exemple d'un mode de réalisation de l'invention

Un dispositif de bouée à remontée commandée selon l'invention comprend notamment :
- une bouée, et
- un support.

### 7.2.1. Bouée

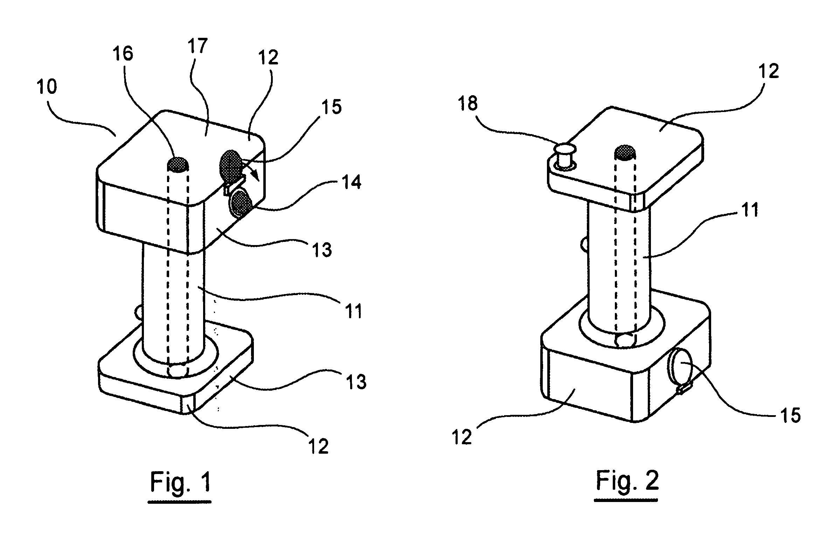

On présente, en relation avec les figures 1 et 2, un mode de réalisation d'une bouée 10 d'un dispositif selon l'invention.

Une telle bouée 10 comprend un axe central 11 dont chaque extrémité est solidaire d'un flanc 12. La bouée 10 constitue ainsi une bobine autour de laquelle peut être enroulé un bout 38. Elle est réalisée dans un matériau plastique et présente une densité inférieure à celle de l'eau en sorte qu'elle peut flotter. Dans des variantes, elle pourra être fabriquée dans d'autres matériaux pourvu qu'elle puisse flotter.

Dans ce mode de réalisation, les flancs 12 sont de forme essentiellement quadrangulaire et présentent quatre faces planes 13.

L'une des faces planes 13 d'un des flancs 12 porte une contre-plaque 14 formant saillie à sa surface. Cette contre-plaque 14, encore appelée plaque polaire, est constituée dans un acier inoxydable magnétisé.

Une première trappe 15 est montée mobile en rotation autour d'un axe sur la face 13 du flanc 12 portant la contre-plaque 14 entre :
- une position ouverte, illustrée à la figure 1, dans laquelle elle ne recouvre pas la contre-plaque 14, et
- une position fermée, illustrée à la figure 2, dans laquelle elle recouvre la contre-plaque 14 en sorte que celle-ci est protégée.

Cette première trappe 15 constitue un moyen de protection de la plaque polaire 14.

Des moyens de rappel élastique, qui comprennent dans ce mode de réalisation un ressort de torsion, tendent à placer et à maintenir la première trappe 15 dans sa position fermée.

La bouée 10 est traversée par un perçage 16 le long de son axe principal et l'un des côtés d'un de ses flancs 12 porte une poignée 18. Il est ainsi possible d'enrouler le bout 38 autour de la bouée 10 en faisant coopérer son perçage 16 avec un axe autour duquel elle peut être entraînée en rotation au moyen de la poignée 18.

### 7.2.2. Support

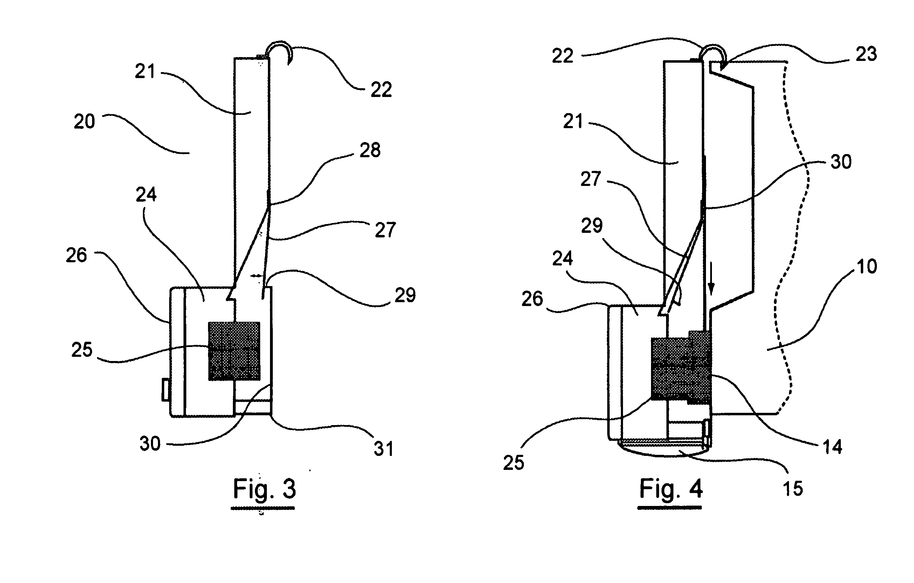

On présente, en relation avec les figures 3 et 4, un mode de réalisation d'un support 20 d'un dispositif selon l'invention.

Un tel support 20 comprend une plaque 21 contre laquelle la bouée 10 est destinée à être solidarisée de manière réversible.

La plaque 21 porte un crochet 22 formant saillie à sa surface. Ce crochet 22 est destiné à coopérer avec une fente 23 ménagée à cet effet sur un côté du flanc 12 opposé au flanc 12 portant la contre-plaque 14 de la bouée 10.

La plaque 21 définit un logement 24 à l'intérieur duquel sont placés un électroaimant 25, des moyens de désactivation de l'électroaimant 25, et des moyens d'alimentation comme une pile. Dans ce mode de réalisation, les moyens de désactivation comprennent une horloge reliée à un automate susceptible d'agir sur l'électroaimant 25 de façon à inhibé momentanément son pouvoir d'attraction magnétique.

L'électroaimant 25 est du type à éjecteur.

Un couvercle amovible 26 permet d'accéder aux composants placés dans le logement étanche 24 par exemple pour procéder à leur maintenance.

Un volet 27 est solidarisé à la plaque 21. Il y est monté mobile en rotation autour d'un axe 28 entre :
- une position rétractée dans laquelle il est pivoté à l'intérieur de la plaque 21, et
- une position escamotée dans laquelle il affleure essentiellement la surface de la plaque 21.

Des moyens de rappels élastiques tendent à maintenir ce volet 27 dans sa position escamotée. Dans une variante, le volet 27 pourra être constitué d'une lame ressort reprenant naturellement sa position escamotée.

Une butée 29 forme saillie à la surface du volet 27. Elle forme également saillie à la surface de la plaque 21 lorsque le volet 27 occupe sa position escamotée.

Une deuxième trappe 30 est montée mobile en translation à la surface de la plaque 21 dans des rails de guidage prévus à cet effet entre :
- une position fermée dans laquelle elle s'étend au-dessus de l'électroaimant 25, et
- une position ouverte dans laquelle elle ne recouvre pas l'électroaimant 25.

La deuxième trappe 30 est maintenue dans sa position fermée en appui par gravité contre un arrêtoir 31 formé dans la plaque 21. Lorsqu'elle est placée dans sa position ouverte, elle y est maintenue en appui contre la butée 29.

Le support 20 est destiné à être solidarisé à un objet à immerger. Dans une variante, il pourra être constitué par l'objet à immerger en lui-même.

### 7.2.3. Commande

Une télécommande permet à un utilisateur de programmer à distance l'horloge. En particulier, l'utilisateur peut choisir la date et l'heure à laquelle l'horloge agira sur l'automate pour arrêter momentanément le pouvoir d'attraction magnétique de l'électroaimant 25. La télécommande pourra permettre de piloter à distance plusieurs dispositifs selon l'invention.

### 7.2.4. Utilisation

Un dispositif selon l'invention est utilisé pour signaler temporairement depuis la surface d'un plan d'eau la présence d'objet qui y est immergé comme par exemple un casier de pêche 40.

Le support 20 est solidarisé à l'un des côtés du casier de pêche 40 en sorte que l'électroaimant 25 soit dirigé vers l'extérieur. La deuxième trappe 30 est déplacée manuellement de sa position fermée à sa position ouverte dans laquelle elle est maintenue en appui contre la butée 29. La première trappe 15 est déplacée manuellement de sa position fermée à sa position ouverte. La bouée 10 est ensuite rapprochée de son support 20 en sorte que la fente 23 coopère avec le crochet 22 et que la contre-plaque 14 coopère avec l'électroaimant 25. La bouée 10 est alors solidarisée de manière réversible à son support 20.

Lorsque la bouée 10 est solidarisée au support 20, le flanc 12 auquel est solidarisée la contre-plaque 14 appuis sur la butée 29 de façon à libérer la deuxième trappe 30 qui est maintenue dans sa position partiellement ouverte en appui contre ce flanc 12 ou contre la contre-plaque 14.

Le bout 38 enroulé autour de la bouée 10 présente une extrémité solidaire de la bouée 10 et une extrémité libre. L'extrémité libre est fixée au casier 40 ou au support 20.

Le casier 40 peut ensuite être immergé dans un plan d'eau en étant jeté par-dessus bord d'une embarcation 39.

De façon à s'assurer que le casier 40 repose de manière satisfaisante au fond du plan d'eau dans lequel il est immergé, c'est-à-dire de manière telle que le dispositif selon l'invention soit placé sur l'un des côtés latéraux du casier 40 reposant au fond du plan d'eau, celui-ci comprend des moyens de descente sécurisée.

Ces moyens de descente sécurisée comprennent un crochet 31 solidaire d'une rampe 32 inclinée par rapport à la surface supérieure du casier 32. Le crochet 31 et la rampe 32 sont solidaires de la face supérieure du casier 40. Dans une variante, la rampe 32 pourra ne pas être mise en oeuvre. Dans ce cas, le contour du crochet 31 sera sensiblement identique à celui de la rampe 32. La rampe pourra être constituée d'une plaque métallique inoxydable destinée à être solidarisée sur la surface supérieure d'un casier 40.

Le crochet 31 est inséré dans une boucle 34 solidaire d'une extrémité d'un bout 33. Le casier 40 est ensuite passé par-dessus bord puis progressivement descendu par un utilisateur au fond du plan d'eau au moyen du bout 33. Lorsque le casier 40 repose au fond du plan d'eau, l'utilisateur continu de dérouler le bout 33. La boucle 34 descend le long de la rampe 32 et se désolidarise du crochet 31. L'utilisateur peut alors remonter le bout 33 en laissant au fond le casier 40.

Dans une variante, le fond du casier 40 peut présenter une forme convexe de façon à former un autre moyen de descente sécurisée. Si au cours de sa descente, le fond du casier 40 ne se trouve pas à l'horizontale, il existe un risque qu'il se dépose sur l'un de ses côtés latéraux, ce qui peut nuire à la remontée de la bouée 10. Du fait que le fond soit convexe, si le casier 40 est déposé sur l'une des arêtes de son fond et non directement sur son fond, il culbutera naturellement de façon que le dispositif de bouée à remontée commandée soit placé sur l'un des côtés latéraux du casier 40 reposant au fond du plan d'eau.

Le casier 40 immergé n'est pas repérable depuis la surface du plan d'eau dans lequel il est immergé du fait que la bouée 10 reste solidaire du support 20 fixé au casier 40. Toutefois, lorsque la législation le requiert, le casier 40 immergé pourra être repérable au moyen d'une deuxième bouée 35 sur laquelle figure par exemple l'immatriculation de l'embarcation 39 du propriétaire. Cette deuxième bouée 35 est fixée à une extrémité d'un bout 36 qui est relié au casier 40 par des moyens de solidarisation 37 prévus pour romprent s'il est tenté de remonter le casier 40 en tirant sur bout 36.

Au moyen de sa télécommande, l'utilisateur programme la date et l'heure à laquelle il envisage de remonter son casier 40.

A la date et à l'heure programmées, l'horloge agit sur l'automate de façon telle que le pouvoir d'attraction magnétique de l'électroaimant 25 soit momentanément inhibé et que son éjecteur, qui se présente sous la forme d'un piston, soit déplacé en direction de la contre-plaque 14 avant que l'électroaimant 25 recouvre sa capacité d'attraction magnétique. La contre-plaque 14 est ainsi décollée de l'électroaimant 25 et la bouée 10 remonte progressivement à la surface du plan d'eau en déroulant le bout 38.

Lorsque la bouée 10 se détache du support 20, la plaque 30 coulisse sous l'effet de la gravité dans sa position fermée dans laquelle elle protège l'électroaimant 25. Des moyens de rappel pourraient être mis en oeuvre dans une variante pour assurer le retour de la deuxième trappe 30 dans sa position fermée. Dans le même temps, la première trappe 15 passe dans sa position fermée dans laquelle elle protège la contre-plaque 14.

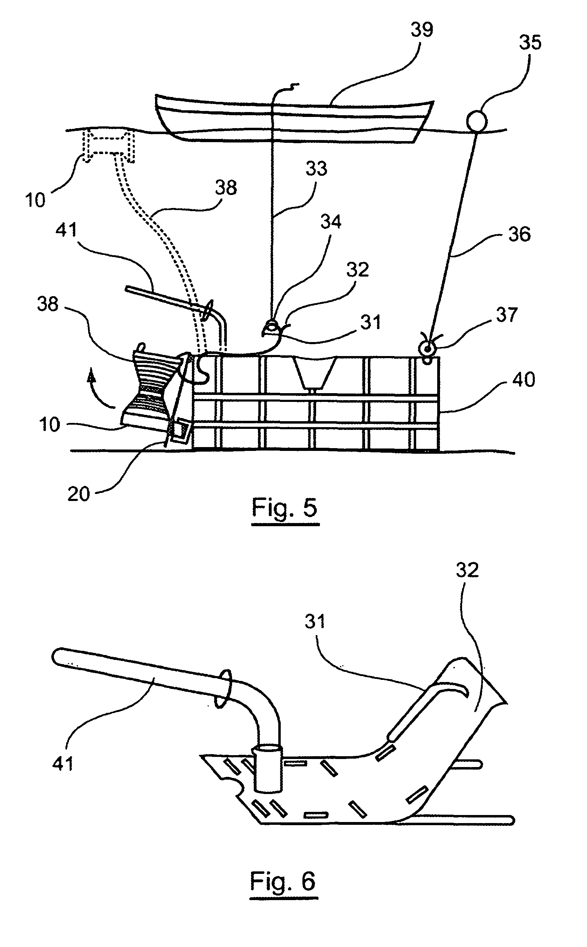

Une fois que la bouée 10 se trouve à la surface (cf. pointillés figure 5), l'utilisateur peut repérer l'emplacement de son casier 40 et tirer sur le bout 38 solidaire de la bouée 10 pour le remonter à la surface.

L'utilisateur peut solidariser un axe 41 en forme de « L » à la face supérieure de son casier 40 et l'insérer dans le perçage 16 de la bouée 10 en vue d'enrouler le bout 38 autour de celle-ci en l'entraînant en rotation par la poignée 18. Il peut ensuite de nouveau placée la bouée 10 sur son support 20 de façon telle que le casier soit prêt à être largué.

### 7.2.5. Variantes

Dans une variante, les moyens de déscactivation de l'électroaimant 25 pourront comprendre un émetteur et un récepteur à la place de l'horloge. Dans ce cas, un émetteur placé pour exemple sous la coque de l'embarcation 40 de l'utilisateur ou dans une télécommande pourra permettre d'envoyer un signal, par exemple ultrasonore, à un récepteur placé dans le support 20, lequel agira sur l'automate pour désactiver momentanément l'électroaimant 25. Dans ce cas, la fréquence du signal émis pourra être réglée pour éviter les interférences avec d'autres dispositifs et les vols par d'autres possesseurs de dispositifs équivalents.

Un dispositif selon l'invention pourra être mis en oeuvre pour permettre de signaler temporairement depuis la surface d'un plan d'eau la présence d'objets quelconques immergés. De tels objets pourront par exemple être un lest 44 lié à un filet de pêche 42 ou à une ligne 43. Ce lest 44 pourra présenter une surface inférieure convexe pour s'assurer que le dispositif de bouée à remontée commandée qu'il met en oeuvre soit placé correctement. Dans cette variante, des moyens de descente sécurisée comprennent un crochet 31 solidaire d'une rampe 32 inclinée par rapport à la surface supérieure du lest 44. Le crochet 31 et la rampe 32 sont solidaires d'une face supérieure plane 70 ménagée à la surface du lest 44.

Dans une variante, le contour du casier 40 pourra comprendre une face incurvée vers l'intérieur du casier 40 de façon à définir un logement intérieur accessible depuis l'extérieur et apte à recevoir un dispositif selon l'invention de façon que celui-ci soit protégé par le casier lorsqu'il est immergé.

Dans une variante, l'électroaimant et les moyens de désactivation pourront être intégrés dans la bouée et la contre-plaque pourra être solidaire du support.

## Revendications

1. Dispositif de bouée à remontée commandée comprenant une bouée (10) et un support (20) immergeable, ladite bouée (10) étant destinée à être reliée de manière réversible audit support (20) immergeable au moyen d'un électroaimant (25) et d'une plaque polaire (14) respectivement solidaires de ladite bouée (10) ou dudit support (20), et des moyens de désactivation dudit électroaimant (25), ledit support (20) étant solidarisable à un objet (40, 44) à immerger,
**caractérisé en ce qu'**il comprend des moyens de protection (15, 30) dudit électroaimant (25) et de ladite plaque polaire (14) lorsque ladite bouée (10) est éloignée dudit support (20), lesdits moyens de protection comprenant une première (15) et une deuxième (30) trappes mobiles entre une position fermée dans laquelle elles protègent respectivement ladite plaque polaire (14) et ledit électroaimant (25) et une position ouverte dans laquelle ledit électroaimant (25) et ladite plaque polaire (14) peuvent être mis en contact.

2. Dispositif selon la revendication 1, **caractérisé en ce que** lesdits moyens de protection (15, 30) sont à retour automatique en position fermée.

3. Dispositif selon l'une quelconque des revendications 1 ou 2, **caractérisé en ce que** ledit électroaimant (25) est du type à éjecteur.

4. Dispositif selon l'une quelconque des revendications 1 à 3, **caractérisé en ce que** ledit électroaimant (25) et/ou ladite plaque polaire (14) sont en acier inoxydable.

5. Dispositif selon l'une quelconque des revendications 1 à 4, **caractérisé en ce que** des moyens de rappel élastique agissent sur ladite première trappe (15) pour la maintenir dans ladite position fermée.

6. Dispositif selon l'une quelconque des revendications 1 à 5, **caractérisé en ce qu'**il comprend des moyens de maintien (29) de ladite deuxième trappe (30) dans ladite position ouverte.

7. Dispositif selon la revendication 6, **caractérisé en ce que** ladite bouée (10) agit sur lesdits moyens de maintien (29) pour relâcher ladite deuxième trappe (30) lorsque ladite bouée (10) est rapprochée dudit support (20), ladite deuxième trappe (30) étant alors maintenue dans la position ouverte par ladite bouée (10).

8. Dispositif selon l'une quelconque des revendications 1 à 7, **caractérisé en ce que** lesdits moyens de désactivation sont du type à impulsion ou programmables.

9. Dispositif selon l'une quelconque des revendications 1 à 8, **caractérisé en ce que** ledit objet (40, 44) porte des moyens de descente sécurisée qui comprennent un crochet (31) solidaire d'une rampe (32) inclinée par rapport à la surface supérieure dudit objet ou présentant un contour incliné par rapport à la surface supérieure dudit objet.

10. Dispositif selon l'une quelconque des revendications 1 à 9, **caractérisé en ce qu'**une deuxième bouée (35) est fixée à une extrémité d'un bout (36) relié audit objet (40, 44) par des moyens de solidarisation (37) prévus pour rompre s'il est tenté de remonter ledit objet (40, 44) en tirant sur ledit bout (36).

11. Dispositif selon l'une quelconque des revendications 1 à 10, **caractérisé en ce qu'**il comprend un axe (41) solidarisable à la face supérieure dudit objet (40), ladite bouée (10) étant traversée le long de son axe principal par un perçage (16), ledit axe (41) pouvant être inséré à rotation dans ledit perçage (16).

12. Casier de pêche (40) dont le contour comprend une face incurvée vers l'intérieur du casier (40) définissant un logement intérieur accessible depuis l'extérieur, ledit logement logeant un dispositif de bouée à remontée commandée selon l'une quelconque des revendications 1 à 11.

## Claims

1. Buoy device with controlled rising comprising a buoy (10) and a submersible support (20), the said buoy (10) being intended to be reversibly connected to said submersible support (20) by means of an electromagnet (25) and a pole-plate (14) which are respectively fixed to the said buoy (10) or the said support (20), and means for deactivating the said electromagnet (25), the said support (20) being capable of being attached to an object (40, 44) which is to be submerged,
**characterised in that** said device comprises means (15, 30) for protecting the said electromagnet (25) and the said pole-plate (14) when the said buoy (10) is apart from the said support (20), the said protective means comprising a first flap (15) and a second flap (30) which can be moved between a closed position in which they protect the said pole-plate (14) and the said electromagnet (25) respectively, and an open position in which the said electromagnet (25) and the said pole-plate (14) can be brought into contact.

2. Device according to claim 1, **characterised in that** the said protective means (15, 30) are of the type having automatic return to the closed position.

3. Device according to either of claims 1 or 2, **characterised in that** the said electromagnet (25) is of the ejector type.

4. Device according to any of claims 1 to 3, **characterised in that** the said electromagnet (25) and/or the said pole-plate (14) are made of stainless steel.

5. Device according to any of claims 1 to 4, **characterised in that** elastic return means act upon the said first flap (15) in order to hold it in the said closed position.

6. Device according to any of claims 1 to 5, **characterised in that** it comprises means (29) for holding the said second flap (30) in the said open position.

7. Device according to claim 6, **characterised in that** the said buoy (10) acts upon the said holding means (29) in order to release the said second flap (30) when the said buoy (10) is brought close to the said support (20), the said second flap (30) then being held in the open position by the said buoy (10).

8. Device according to any of claims 1 to 7, **characterised in that** the said deactivating means are of the impulse or programmable type.

9. Device according to any of claims 1 to 8, **characterised in that** the said object (40, 44) carries means of guaranteed descent which comprise a hook (31) which is fixed to a ramp (32) which is inclined in relation to the upper surface of the said object or has a contour which is inclined in relation to the upper surface of the said object.

10. Device according to any of claims 1 to 9, **characterised in that** a second buoy (35) is fastened to one end of a rope (36) which is connected to the said object (40, 44) by means (37) of attachment which are designed to break if an attempt is made to raise the said object (40, 44) by pulling on the said rope (36).

11. Device according to any of claims 1 to 10, **characterised in that** it comprises a shaft (41) which can be attached to the upper face of the said object (40), the said buoy (10) having a bore (16) passing through it along its main axis, it being possible for the said shaft (41) to be rotatably inserted in the said bore (16).

12. Fishing pot (40), the contour of which comprises a face which is curved towards the interior of the pot (40), defining an internal housing which is accessible from the outside, the said housing accommodating a buoy device with controlled rising according to any of claims 1 to 11.

## Patentansprüche

1. Bojenvorrichtung mit gesteuertem Aufstieg, welche eine Boje (10) und einen eintauchbaren Halter (20) umfasst, wobei die Boje (10) dazu bestimmt ist, auf reversible Weise mittels eines Elektromagneten (25) und einer Polplatte (14), die mit der Boje (10) bzw. mit dem Halter (20) oder mit dem Halter (20) bzw. mit der Boje (10) fest verbunden sind, mit dem eintauchbaren Halter (20) verbunden zu werden, und Mittel zur Deaktivierung des Elektromagneten (25), wobei der Halter (20) mit einem einzutauchenden Objekt (40, 44) fest verbindbar ist,
**dadurch gekennzeichnet, dass** sie Schutzmittel (15, 30) des Elektromagneten (25) und der Polplatte (14) umfasst, wenn die Boje (10) von dem Halter (20) entfernt ist, wobei die Schutzmittel eine erste (15) und eine zweite (30) Klappe umfassen, die zwischen einer geschlossenen Position, in welcher sie die Polplatte (14) bzw. den Elektromagneten (25) schützen, und einer offenen Position, in welcher der Elektromagnet (25) und die Polpatte (14) in Kontakt gebracht werden können, bewegbar sind.

2. Vorrichtung nach Anspruch 1, **dadurch gekennzeichnet, dass** die Schutzmittel (15, 30) mit automatischer Rückkehr in die geschlossene Position ausgebildet sind.

3. Vorrichtung nach einem der Ansprüche 1 oder 2, **dadurch gekennzeichnet, dass** der Elektromagnet (25) mit einer Ausstoßvorrichtung ausgebildet ist.

4. Vorrichtung nach einem der Ansprüche 1 bis 3, **dadurch gekennzeichnet, dass** der Elektromagnet (25) und/oder die Polplatte (14) aus Edelstahl hergestellt sind.

5. Vorrichtung nach einem der Ansprüche 1 bis 4, **dadurch gekennzeichnet, dass** elastische Rückstellmittel auf die erste Klappe (15) einwirken, um sie in der geschlossenen Position zu halten.

6. Vorrichtung nach einem der Ansprüche 1 bis 5, **dadurch gekennzeichnet, dass** sie Mittel zum Halten (29) der zweiten Klappe (30) in der offenen Position umfasst.

7. Vorrichtung nach Anspruch 6, **dadurch gekennzeichnet, dass** die Boje (10) auf die Mittel zum Halten (29) einwirkt, um die zweite Klappe (30) freizugeben, wenn die Boje (10) an den Halter (20) angenähert wird, wobei die zweite Klappe (30) dann durch die Boje (10) in der offenen Position gehalten wird.

8. Vorrichtung nach einem der Ansprüche 1 bis 7, **dadurch gekennzeichnet, dass** die Mittel zur Deaktivierung mit Impulssteuerung oder programmierbar ausgeführt sind.

9. Vorrichtung nach einem der Ansprüche 1 bis 8, **dadurch gekennzeichnet, dass** das Objekt (40, 44) Mittel zum gesicherten Absenken trägt, welche einen Haken (31) umfassen, der mit einer Rampe (32) fest verbunden ist, die bezüglich der oberen Fläche des Objekts geneigt ist oder eine Kontur aufweist, die bezüglich der oberen Fläche des Objekts geneigt ist.

10. Vorrichtung nach einem der Ansprüche 1 bis 9, **dadurch gekennzeichnet, dass** eine zweite Boje (35) an einem Ende eines Taus (36) befestigt ist, das mit dem Objekt (40, 44) durch Befestigungsmittel (37) verbunden ist, die dafür vorgesehen sind zu brechen, wenn versucht wird, das Objekt (40, 44) durch Ziehen an dem Tau (36) nach oben zu holen.

11. Vorrichtung nach einem der Ansprüche 1 bis 10, **dadurch gekennzeichnet, dass** sie einen Zapfen (41) umfasst, der mit der Oberseite des Objekts (40) fest verbindbar ist, wobei die Boje (10) entlang ihrer Hauptachse von einer Bohrung (16) durchquert wird, wobei der Zapfen (41) drehbar in die Bohrung (16) eingeführt werden kann.

12. Schließfach für Fischerei (40), deren Kontur der Schließfach für Fischerei (40) eine zum Inneren hin gekrümmte Seite umfasst, die eine von außen zugängliche innere Aufnahme definiert, wobei die Aufnahme eine Bojenvorrichtung mit gesteuertem Aufstieg nach einem der Ansprüche 1 bis 11 aufnimmt.
